# DEMANDE DE BREVET EUROPEEN

(11) **EP 2 442 518 A1**
(43) Date de publication de la demande: **18.04.2012**
(21) Numéro de dépôt: 10306136.2
(22) Date de dépôt: 18.10.2010
(51) Int. Cl.: H04L 29/06

(54) **Procédé de traitement de requêtes SIP initiales par des backends d'un groupe SIP en présence d'une défaillance, et dispositif de traitement associé**

(71) Demandeur: Alcatel Lucent, 75007 Paris (FR)
(72) Inventeur: Tombroff, Dimitri, 91620 Nozay (FR); Bourget, Yannick, 91620 Nozay (FR)
(74) Mandataire: Nicolle, Olivier

(57) **Abrégé**

Un dispositif (D) est dédié au traitement de requêtes SIP initiales pour un module logiciel de traitement final (B1), ci-après appelé backend et appartenant à un groupe SIP opérant pour une application dans un réseau de communication (R). Ce dispositif (D) est agencé, lorsque son backend (B1) a reçu une requête SIP initiale associée à un identifiant d'appel, pour déterminer localement si ce dernier (B1) a déjà reçu une requête SIP initiale identique, et dans l'affirmative pour considérer que la requête SIP initiale reçue a été retransmise et pour traiter cette retransmission, ou dans la négative pour déterminer dans une table, offrant une correspondance entre des identifiants d'appel, associés à des requêtes SIP initiales précédemment reçues, et des identifiants de backends (B1-B3) ayant reçu ces requêtes SIP initiales, si il existe un autre backend (B2) du groupe SIP ayant un identifiant correspondant à l'identifiant d'appel associé à la requête SIP initiale reçue, afin, dans la négative, de traiter cette dernière, ou, dans l'affirmative, de recevoir l'identifiant du second backend (B2) pour signaler à ce dernier (B2) qu'il doit traiter une retransmission d'une requête SIP initiale précédemment reçue et associée au même identifiant d'appel que celui de la requête SIP initiale reçue.

## Description

### Domaine technique

L'invention concerne le traitement de requêtes SIP dites initiales, au sein de réseaux de communication, et plus précisément le traitement des requêtes SIP initiales par des modules logiciels de traitement final (ou "backends SIP") d'applications distribuées appartenant à des groupes (ou "clusters") de backends SIP, suite à un échec ou une défaillance.

On entend ici par "requête SIP initiale" une requête SIP ("Session Initiation Protocol") qui est destinée à requérir l'établissement (ou création) d'une nouvelle session SIP. Par ailleurs, on entend ci-après par "retransmission d'une requête SIP initiale" une requête SIP en tout point identique à une précédente requête SIP initiale (et en particulier ayant le même identifiant d'appel (ou "Call-id")), et qui a été émise en l'absence de réponse à la précédente requête SIP initiale.

### Etat de l'art

Les serveurs SIP d'applications de type serveur ou proxy travaillent avec des groupes SIP comportant des backends SIP fonctionnellement identiques. Cela permet une mise à l'échelle et une disponibilité élevée (ou une haute performance). Le trafic entrant, relatif à un groupe SIP est reçu par un répartiteur de charge d'entrée, associé à ce groupe SIP, et chargé de distribuer les messages entrants vers les backends concernés de son groupe SIP.

Un backend SIP comprend un conteneur SIP dédié qui est en charge de la gestion des sessions et transactions SIP de bas niveau. Un conteneur SIP est un environnement d'exécution pour une application finale qui est chargée de traiter une requête SIP reçue, et qui est généralement agencée sous la forme d'un "servlet" ou d'un module de type servlet.

Les backends d'un même groupe SIP pouvant être implantés dans des éléments ou équipements de réseau différents ou bien dans un même élément ou équipement de réseau, le conteneur SIP associé peut donc être implanté dans ces mêmes éléments ou équipements de réseau différents ou bien dans le même élément ou équipement de réseau.

### Résumé de l'invention

Comme le sait l'homme de l'art, il a été proposé de conserver dans la mémoire d'un répartiteur de charge d'entrée, associé à un groupe de backends, une table de correspondance entre des identifiants d'appel (ou "Call-ids"), associés à des premières requêtes SIP initiales, et des identifiants de backends, destinataires de ces premières requêtes SIP initiales. Ainsi, lorsqu'une requête SIP initiale associée à un identifiant d'appel est reçue par ce répartiteur de charge d'entrée, il détermine dans sa table de correspondance si il existe un identifiant de backend qui est stocké en correspondance de cet identifiant d'appel. Dans la négative, il sélectionne au hasard un backend afin de lui transmettre la requête SIP initiale reçue et stocke dans sa table de correspondance une nouvelle entrée associant l'identifiant d'appel de cette requête SIP initiale à l'identifiant de ce backend. Dans l'affirmative, la requête SIP initiale reçue est transmise au backend dont l'identifiant correspond dans la table à l'identifiant d'appel qui est associé à cette requête SIP initiale. En cas de défaut de fonctionnement du backend destinataire de la requête SIP initiale, on supprime de la table de correspondance du répartiteur de charge d'entrée toutes les entrées concernant ce backend défaillant.

On notera qu'un identifiant d'appel seul ne suffit pas à permettre la détermination d'un paquet qui est retransmis. Mais, l'utilisation d'un identifiant d'appel est suffisante parce qu'un paquet transmis et un paquet retransmis ont le même identifiant d'appel.

La solution algorithmique présentée ci-avant est simple et efficace. Cependant, elle ne permet pas de traiter les situations dans lesquelles la défaillance ou l'échec d'une transmission résulte du répartiteur de charge d'entrée. En effet, si ce dernier est défaillant ou si il est relancé (sur le même équipement ou sur un équipement de sauvegarde), il va utiliser une table de correspondance vide ou pas à jour. En outre, la défaillance d'un répartiteur de charge d'entrée est susceptible d'entraîner un grand nombre de retransmissions de requêtes SIP initiales étant donné que sa détection, et la relance qui suit, prennent généralement quelques secondes. Par conséquent, dans les premières secondes qui suivent sa relance (ou son lancement), un répartiteur de charge d'entrée est susceptible de recevoir un nombre important de requêtes SIP initiales (retransmises par des terminaux de communication) qu'il va adresser de façon aléatoire aux différents backends de son groupe SIP. Les backends qui ne sont pas les bons destinataires des requêtes SIP initiales retransmises, vont alors considérer ces dernières comme de nouvelles requêtes SIP initiales (c'est-à-dire transmises pour la première fois), qu'ils vont traiter classiquement (conformément au protocole SIP), ce qui va leurrer (ou duper) l'application finale (ou servlet) concernée et donc empêcher que sa consistance soit garantie. Il est en effet rappelé que le conteneur SIP doit notamment garantir qu'une application finale ne sera jamais rappelée plusieurs fois pour une même transaction SIP dans différents backends d'un même groupe SIP.

Plusieurs solutions ont été proposées pour tenter de remédier à l'inconvénient précité.

Ainsi, il a été proposé de stocker le contexte de chaque transaction SIP dans une base de données associée à un groupe SIP, afin que chaque backend de ce groupe SIP puisse gérer chaque message SIP de n'importe quelle transaction SIP. En fait, chaque backend peut exécuter le traitement qui suit pour chaque transaction SIP de chaque session SIP, et donc le cas de la retransmission d'une requête SIP initiale se trouve correctement réglé de facto. Cette solution est certes lourde, mais elle est sensée compte tenu des hautes performances qui sont requises. Cependant, cette solution présente un inconvénient notable. En effet, elle impose de sévères contraintes à l'application finale étant donné que chaque contexte applicatif associé à un dialogue SIP doit être inclus dans les données de session SIP et de transaction SIP qui sont stockées. En fait, l'application finale ne peut pas utiliser la moindre ressource locale d'un backend qui n'est pas le véritable destinataire d'une requête SIP initiale retransmise, comme par exemple ses temporisations (ou "timers"). Par conséquent, le traitement doit être finalement redirigé vers le backend concerné puisque c'est celui qui dispose des temporisations et autres ressources locales utilisables, ce qui revient à transférer le problème du moteur de transactions SIP vers l'application. Cette solution induit donc une forte limitation des performances et s'avère trop complexe à gérer pour une application finale.

Une variante de la solution précédente consiste à répliquer dans les backends au moyen d'une stratégie de réplication factice les sessions des servlets SIP (et non les transactions SIP). En fait, chaque session SIP est répliquée dans deux backends différents d'un même groupe SIP. La session SIP est seulement répliquée lorsque cela s'avère nécessaire, c'est-à-dire une fois que le dialogue SIP a été établi. Cette solution est plus efficace que la précédente du fait qu'elle ne nécessite pas une base de données dédiée et séparée, ce qui réduit notablement le nombre de messages échangés. Comme les sessions SIP sont répliquées, et donc localisables dans un groupe SIP, il est possible de vérifier si une requête SIP initiale (qui n'est pas encore connue localement dans un backend) résulte d'une retransmission d'une requête SIP précédemment reçue dans un autre backend. Cependant, l'identifiant d'appel ne constitue pas la clé d'une session SIP, et, pour une question de coût, une session SIP n'est pas habituellement rendue persistante lorsque l'on reçoit la requête SIP initiale mais plutôt lorsque l'on passe dans l'état de session SIP établie. Par conséquent, la session SIP est créée trop tardivement pour permettre d'aider à confirmer qu'une requête SIP initiale est une requête SIP retransmise.

On notera qu'en théorie on pourrait envisager de traiter le problème de la défaillance directement au sein des répartiteurs de charge d'entrée. Ainsi, on pourrait utiliser dans chaque groupe SIP deux répartiteurs de charge d'entrée avec des tables de correspondance (ou bases de données) dupliquées. Hélas, lorsque l'un des deux répartiteurs de charge d'entrée d'un groupe SIP est défaillant et qu'il est relancé, il doit se resynchroniser sur l'autre table de correspondance dupliquée qui est devenue potentiellement plus grosse, ou bien vérifier sur demande si un identifiant d'appel d'une nouvelle requête SIP n'est pas déjà contenu dans l'autre table de correspondance dupliquée, pour au final remplir sa propre table de correspondance sans quoi une défaillance du second répartiteur de charge conduirait à la perte définitive de l'information. Ce mode de fonctionnement nécessite l'utilisation de files d'attente temporaires qui sont susceptibles de mettre en danger les répartiteurs de charge d'entrée.

Il serait également possible d'utiliser des fonctions de hachage pour associer de façon univoque des identifiants d'appel à des identifiants de backend. Mais, le répartiteur de charge d'entrée se retrouverait confronté à un problème chaque fois qu'un backend rejoindrait ou quitterait son groupe SIP, étant donné que cela induirait une modification de sa fonction de hachage, et/ou il serait incapable de choisir un backend en fonction de certains critères, comme par exemple sa charge ou son temps de réponse.

L'invention a notamment pour but de permettre une gestion des défaillances ou échecs qui requiert un minimum de trafic additionnel au sein d'un réseau de communication. On notera que l'invention n'est pas relative à la transmission vers un même backend de messages SIP qui sont postérieurs à la création effective d'une session SIP ou à la jonction effective d'un terminal de communication à une session SIP existante.

Selon un premier aspect, l'invention propose un procédé, dédié au traitement de requêtes SIP initiales au sein d'un groupe SIP de backends opérant pour une application dans un réseau de communication, et dans lequel, lorsqu'un premier backend du groupe SIP reçoit une requête SIP initiale associée à un identifiant d'appel, on détermine localement si il a déjà reçu une requête SIP initiale identique, et dans l'affirmative ce premier backend considère que la requête SIP initiale reçue a été retransmise et traite cette retransmission, tandis que dans la négative on détermine dans une table, qui offre une correspondance entre des identifiants d'appel, associés à des requêtes SIP initiales précédemment reçues, et des identifiants de backends ayant reçu ces requêtes SIP initiales, si il existe un second backend du groupe SIP qui a un identifiant correspondant à l'identifiant d'appel associé à la requête SIP initiale reçue, puis dans la négative le premier backend traite la requête SIP initiale reçue, tandis que dans l'affirmative on fournit au premier backend l'identifiant du second backend afin qu'il signale à ce dernier qu'il doit traiter une retransmission d'une requête SIP initiale précédemment reçue et associée au même identifiant d'appel que celui de la requête SIP initiale reçue.

Le procédé selon l'invention peut comporter d'autres caractéristiques qui peuvent être prises séparément ou en combinaison, et notamment :
- le premier backend peut adresser au second backend une notification qui comporte l'identifiant d'appel de la requête SIP initiale reçue, ou bien il peut transmettre au second backend la requête SIP initiale reçue afin qu'il la traite;
- lorsqu'il n'existe pas de backend ayant un identifiant correspondant à l'identifiant d'appel associé à la requête SIP initiale reçue, on peut créer dans la table une nouvelle correspondance entre ce dernier identifiant d'appel et l'identifiant du premier backend;
- la table peut être une table de hachage qui est éventuellement distribuée dans au moins deux backends différents du groupe SIP.

Selon un deuxième aspect, l'invention propose un dispositif, dédié au traitement de requêtes SIP initiales pour un backend appartenant à un groupe SIP opérant pour une application dans un réseau de communication, et agencé, lorsque son backend a reçu une requête SIP initiale associée à un identifiant d'appel, pour déterminer localement si ce backend a déjà reçu une requête SIP initiale identique, et dans l'affirmative pour considérer que la requête SIP initiale reçue a été retransmise et pour traiter cette retransmission, ou dans la négative pour déterminer dans une table, qui offre une correspondance entre des identifiants d'appel, associés à des requêtes SIP initiales précédemment reçues, et des identifiants de backends ayant reçu ces requêtes SIP initiales, si il existe un autre backend du groupe SIP qui a un identifiant correspondant à l'identifiant d'appel associé à la requête SIP initiale reçue, afin, dans la négative, de traiter cette dernière, ou, dans l'affirmative, de recevoir l'identifiant du second backend pour signaler à ce dernier qu'il doit traiter une retransmission d'une requête SIP initiale précédemment reçue et associée au même identifiant d'appel que celui de la requête SIP initiale reçue.

Le dispositif selon l'invention peut comporter d'autres caractéristiques qui peuvent être prises séparément ou en combinaison, et notamment :
- il peut adresser au second backend une notification qui comporte l'identifiant d'appel de la requête SIP initiale reçue, ou bien il peut transmettre au second backend la requête SIP initiale reçue afin qu'il la traite;
- il peut être agencé, lorsqu'il n'existe pas de backend ayant un identifiant correspondant à l'identifiant d'appel associé à la requête SIP initiale reçue, pour provoquer la création dans la table d'une nouvelle correspondance entre ce dernier identifiant d'appel et l'identifiant du premier backend;
- il peut être agencé pour stocker une partie d'une table qui se présente sous la forme d'une table de hachage distribuée.

Selon un troisième aspect, l'invention propose un équipement de communication, propre à être connecté à un réseau de communication, et comprenant au moins un backend appartenant à un groupe SIP opérant pour une application et comprenant un dispositif de traitement du type de celui présenté ci-avant.

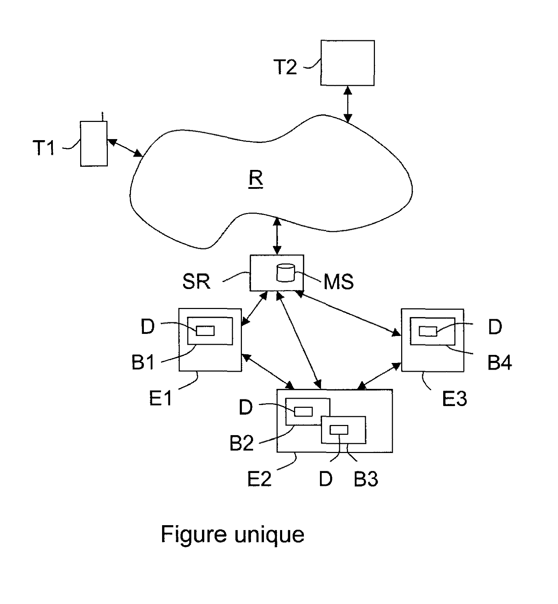

### Brève description du dessin

D'autres caractéristiques et avantages de l'invention apparaîtront à l'examen de la description détaillée ci-après, et du dessin annexé, sur lequel l'unique figure illustre de façon très schématique et fonctionnelle un réseau de communication auquel sont connectés des terminaux de communication et un serveur de répartition de charge couplé à trois équipements de communication comportant chacun au moins un backend muni d'un dispositif de traitement selon l'invention.

Le dessin annexé pourra non seulement servir à compléter l'invention, mais aussi contribuer à sa définition, le cas échéant.

### Description détaillée

L'invention a pour objet de permettre le traitement des requêtes SIP initiales au sein d'un groupe SIP de modules logiciels de traitement final (Bi), ci-après appelés backends et opérant pour une application (finale) dans un réseau de communication (R).

On notera que l'invention concerne n'importe quel type de réseau de communication, qu'il soit filaire ou non filaire (ou radio). Il est en effet rappelé que le protocole SIP offre une indépendance vis-à-vis de la couche protocolaire de transport.

On a schématiquement illustré sur l'unique figure un réseau de communication R auquel sont connectés des terminaux de communication Tk, appartenant à des usagers, et un serveur SR jouant le rôle d'un répartiteur de charge d'entrée (ou "load balancer") pour un groupe (ou "cluster") de backends SIP Bi (ci-après appelé groupe SIP).

On entend ici par "terminal de communication" tout équipement de communication pouvant se connecter à un réseau de communication et disposant d'au moins un client SIP ("Session Initiation Protocol") propre à dialoguer avec un serveur SIP lors d'une session SIP établie dans un environnement de type client/serveur. Par conséquent, il pourra s'agir d'un téléphone fixe ou mobile (ou cellulaire), éventuellement de type "smartphone", d'un ordinateur fixe ou portable, d'un assistant personnel numérique (ou PDA), d'un récepteur de contenus multimédia (par exemple un décodeur, une passerelle résidentielle (ou "residential gateway") ou un STB ("Set-Top Box")), ou d'une console de jeux communicante, par exemple.

Dans l'exemple non limitatif illustré, l'indice k prend les valeurs 1 et 2, mais le nombre de terminaux de communication Tk, connectés ou connectables au réseau de communication R, peut être égal à n'importe quelle valeur supérieure ou égale à un (1).

Le serveur SR est de type SIP et peut être couplé à un ou plusieurs serveurs d'application(s) Ej, également de type SIP, et comportant chacun au moins un backend Bi appartenant à un groupe SIP opérant pour une fonction.

Chaque serveur d'application(s) Ej est par exemple de type serveur (éventuellement de type B2BUA ("Back-to-Back User Agent")) ou proxy.

Dans l'exemple non limitatif illustré, l'indice j prend les valeurs 1 à 3, mais le nombre de serveurs d'application(s) Ej couplés à un même serveur de répartition de charge SR peut être égal à n'importe quelle valeur supérieure ou égale à un (1). En effet, on peut envisager que tous les backends Bi d'un groupe SIP soient implantés dans un même serveur d'application(s) ou dans un équipement (ou élément) de communication d'un autre type.

Par ailleurs, dans l'exemple non limitatif illustré, les premier E1 et troisième E3 serveurs d'application(s) comprennent chacun un backend B1 (i = 1) ou B4 (i = 4), alors que le deuxième serveur d'application(s) E2 comprend deux backends B2 (i = 2) et B3 (i = 3). Mais, tous les serveurs d'application(s) Ej pourraient ne comporter qu'un seul backend Bi ou bien plusieurs (au moins deux) backends Bi.

Il est rappelé que le serveur de répartition de charge SR est notamment chargé de recevoir les messages SIP entrants (requêtes ou messages de réponse) qui sont destinés aux backends Bi de son groupe SIP, afin de les distribuer à ces backends Bi. Il comprend également des moyens de stockage MS qui sont chargés de stocker une table offrant une correspondance entre des identifiants d'appel, associés à des requêtes SIP initiales précédemment reçues par les backends Bi de son groupe SIP, et des identifiants de ces backends (Bi). Cette table peut être une table de correspondance agencée sous la forme d'une base de données. Mais, dans une variante elle peut être agencée sous la forme d'une table de hachage, c'est-à-dire une table qui fournit de façon univoque un identifiant de backend Bi lorsqu'on fournit à sa fonction de hachage un identifiant d'appel.

Dans ce qui suit, on considère, à titre d'exemple illustratif, que les requêtes SIP et messages de réponse SIP, que les serveurs d'application(s) Ej s'échangent entre eux ou bien transmettent aux terminaux de communication Tk, transitent tous par le serveur de répartition de charge SR qui sert d'interface avec le réseau de communication R. Mais cela n'est pas une obligation.

Il est également rappelé que chaque backend SIP Bi supporte un conteneur SIP dédié qui est en charge de la gestion des sessions et transactions SIP de bas niveau.

Enfin, il est également rappelé qu'un conteneur SIP est un environnement d'exécution pour une application (finale) qui est chargée de traiter une requête SIP reçue par le serveur de répartition de charge SR qui est associé (ou dédié) à son groupe SIP. On considère dans ce qui suit, à titre d'exemple non limitatif, que l'application (finale) est agencée sous la forme d'un "servlet" ou d'un module de type servlet. Mais, cela n'est pas obligatoire. Par ailleurs, on considère dans ce qui suit, à titre d'exemple non limitatif, que l'application (finale) et le conteneur SIP sont implantés dans chaque serveur d'application(s) Ej. Mais, cela n'est pas obligatoire.

L'invention propose notamment de mettre en oeuvre un procédé de traitement de requêtes SIP dans un système de communication du type de celui présenté ci-avant en référence à l'unique figure.

Ce procédé peut être mis en oeuvre au moyen de dispositifs de traitement D qui sont associés respectivement aux backends Bi d'un groupe SIP. On entend ici par "associé" aussi bien le fait de faire partie intégrante d'un backend Bi (comme illustré), que le fait d'être couplé directement ou indirectement à un backend Bi. Par conséquent, un dispositif de traitement D peut être réalisé sous la forme de modules logiciels (ou informatiques), ou bien de circuits électroniques, ou encore d'une combinaison de circuits électroniques et de modules logiciels.

Le procédé est mis en oeuvre dans un groupe SIP chaque fois qu'un premier backend Bi (par exemple B1) de ce groupe SIP reçoit de son serveur de répartition de charge SR une requête SIP initiale associée à un identifiant d'appel (ou "Call-id") et provenant d'un terminal de communication Tk.

Dans ce cas, on (le dispositif D associé à ce premier backend B1) détermine localement si ce premier backend B1 a déjà reçu une requête SIP initiale identique. Il est rappelé que chaque backend Bi conserve temporairement la trace de chaque requête SIP initiale qu'il reçoit et de la réponse résultant du traitement local de chaque requête SIP initiale reçue. Cela lui permet notamment de retransmettre à un terminal de communication Tk, qui lui retransmet une requête SIP initiale en raison de l'absence de réception d'une réponse à une précédente requête SIP initiale identique à cette dernière, une réponse qui est identique à celle qu'il avait précédemment transmise mais qui n'a pas été reçue. La non réception d'un message de réponse par un terminal de communication Tk peut avoir n'importe quelle origine, et notamment un problème de transmission sur le réseau de communication R, une défaillance du serveur de répartition de charge SR qui sert d'interface entre le réseau de communication R et les backends Bi, une défaillance en réception du terminal de communication Tk ou une défaillance en transmission du serveur d'application(s) Ej qui contient le backend Bi qui a généré le message de réponse.

Si il s'avère que le premier backend B1 a déjà reçu une requête SIP initiale identique, alors le premier backend B1 (et plus précisément son dispositif associé D) considère qu'il s'agit d'une retransmission qui le concerne et donc il traite cette retransmission. Ce traitement est tout à fait classique (et conforme au protocole SIP). Il consiste tout simplement à répondre par un message qui comporte une réponse identique à celle précédemment transmise consécutivement au traitement de la même requête SIP initiale (c'est-à-dire associée au même identifiant d'appel).

En revanche, si il s'avère que le premier backend B1 n'a pas reçu une requête SIP initiale identique, alors le premier backend B1 (et plus précisément son dispositif associé D) détermine, au moyen d'une requête, dans une table qui offre une correspondance entre des identifiants d'appel, associés à des requêtes SIP initiales précédemment reçues, et des identifiants de backends (Bi) ayant reçu ces requêtes SIP initiales, si il existe un second backend Bi' (i' ≠1, par exemple i' = 2) de son groupe SIP qui est associé à un identifiant qui correspond à l'identifiant d'appel associé à la requête SIP initiale reçue.

On notera que la table peut être stockée dans au moins un serveur d'application(s) Ej, éventuellement de façon distribuée (ou répartie), et/ou dans un autre équipement ou élément de communication (non représenté) qui est accessible aux serveurs d'application(s) Ej et qui est différent du serveur de répartition de charge SR. On notera également que la requête qui est destinée à effectuer une détermination dans cette table ne transite pas obligatoirement par le serveur de répartition de charge SR.

Cette table peut être une table de correspondance agencée sous la forme d'une base de données. Mais, dans une variante avantageuse elle peut être agencée sous la forme d'une table de hachage, c'est-à-dire une table qui fournit de façon univoque un identifiant de backend Bi lorsqu'on fournit à sa fonction de hachage un identifiant d'appel. De façon encore plus avantageuse, la table de hachage peut être distribuée dans au moins deux backends Bi d'un même groupe SIP.

La distribution de la table de hachage entre plusieurs backends Bi implique, d'une part, des sous-tables plus petites, et, d'autre part, que plusieurs backends Bi détiennent des informations de correspondance différentes. La recherche de correspondance peut donc se faire en parallèle pour des identifiants d'appel répartis sur des parties différentes de la table de hachage, ce qui permet de travailler plus vite. On notera que dans un souci de robustesse du système chaque partie de table (ou sous-table) doit être répliquée dans plusieurs (n) backends Bi, afin de pallier le cas où l'un des backends Bi qui détient une réplique devient indisponible suite à une défaillance ou un redémarrage. Par ailleurs, en cas de défaillance d'un backend Bi contenant une réplique d'une sous-table, il est avantageux de choisir un autre backend Bi' pour y re-répliquer cette sous-table de façon à garantir que n copies de cette sous-table existent et sont accessibles à chaque instant. Découper et distribuer une table en sous-tables plus petites et répliquées n fois chacune permet donc d'améliorer les performances du mécanisme de réplication décrit ci-avant.

On notera que les entrées d'une table n'ont pas obligatoirement besoin d'être supprimées explicitement à la fin d'une transaction SIP. Elles peuvent en effet disparaître d'elles-mêmes après un délai prédéfini. Cela permet d'éviter aux backends Bi d'avoir à transmettre des messages additionnels destinés à demander la suppression d'une entrée.

Si il s'avère qu'il n'existe pas dans la table interrogée d'identifiant de backend Bi' correspondant à l'identifiant d'appel associé à la requête SIP initiale considérée, cela signifie que cette dernière est transmise pour la première fois et donc qu'il ne s'agit pas d'une retransmission. On adresse alors au premier backend B1 un message de réponse lui signalant qu'il est chargé de traiter (au moyen de son dispositif associé D) la requête SIP initiale qu'il vient de recevoir.

Ce traitement est alors tout à fait classique (et conforme au protocole SIP). Il aboutit à la génération d'un message de réponse destiné au terminal de communication Tk qui a transmis la requête SIP initiale considérée.

En revanche, si il s'avère qu'il existe dans la table interrogée un identifiant de second backend Bi' (par exemple i' = 2) qui correspond à l'identifiant d'appel associé à la requête SIP initiale considérée, cela signifie que cette dernière est retransmise. On adresse alors au premier backend B1 un message de réponse contenant l'identifiant du second backend B2, afin qu'il (et plus précisément son dispositif associé D) signale à ce second backend B2 qu'il doit traiter une retransmission d'une requête SIP initiale qu'il a précédemment reçue (et traitée) et qui est associée à l'identifiant d'appel de la requête SIP initiale reçue par le premier backend B1.

Ce traitement de retransmission est tout à fait classique (et conforme au protocole SIP). Il aboutit à la génération d'un nouveau message de réponse, identique à celui qui avait été précédemment généré en réponse à la précédente requête SIP reçue associée au même identifiant d'appel, et destiné au même terminal de communication Tk.

On notera que, contrairement à ce qui se fait dans l'art antérieur, le serveur de répartition de charge SR n'intervient plus ici pour déterminer de façon aléatoire un nouveau backend Bi destiné à traiter la dernière requête SIP reçue une fois que l'on s'est aperçu que la table ne contenait pas d'entrée pour l'identifiant d'appel de cette dernière requête SIP. C'est en effet le premier backend B1 qui a reçu cette dernière requête SIP qui est automatiquement chargé de la traiter.

On notera également que pour effectuer une détermination d'identifiant de backend Bi dans la table, on peut avantageusement utiliser une requête de type "créer/obtenir" (ou "create/get") à destination de cette table, bien connue de l'homme de l'art. Celle-ci permet en effet non seulement d'obtenir une réponse à une requête d'obtention d'identifiant de backend Bi, au moyen d'un message de réponse SIP, mais également de mettre à jour automatiquement la table en créant éventuellement dans cette dernière une nouvelle correspondance entre un identifiant d'appel et un identifiant de premier backend B1, désignés dans la requête d'obtention précitée, en cas de non détermination dans ladite table d'un identifiant de second backend Bi' (i' ≠ 1). En fait, lorsqu'une mise à jour est effectuée, le message de réponse qui est transmis au premier backend B1 est destiné à la signaler à ce dernier (B1).

Grâce à la mise à jour automatique de la table en temps réel, le groupe SIP dispose à chaque instant d'une source d'informations fiable qui peut être notamment utilisée par le serveur de répartition de charge SR pour mettre à jour sa propre table (stockée dans ses moyens de stockage MS) lorsqu'il a fait l'objet d'une défaillance. Ainsi, lorsque le serveur de répartition de charge SR reçoit une requête SIP associée à un identifiant d'appel dont la correspondance est à jour dans sa table, il est en mesure de la transmettre au backend Bi concerné, sans erreur et sans avoir à effectuer une détermination d'identifiant de backend Bi au hasard.

On notera également que lorsque l'identifiant d'un second backend B2 a été déterminé dans la table, le premier backend B1 (et plus précisément son dispositif associé D) peut soit adresser à ce second backend B2 une notification comportant l'identifiant d'appel de la dernière requête SIP initiale reçue, soit transmettre au second backend B2 cette dernière requête SIP initiale reçue afin qu'il la traite. La première solution est actuellement préférée car elle ne nécessite qu'un message (ou notification) contenant très peu de données, contrairement à une requête SIP initiale complète.

L'invention n'entraîne qu'une surcharge minimale du réseau de communication. En effet, elle nécessite une transaction de type "créer/obtenir" (ou "create/get") vers la table (requête de détermination d'identifiant de backend dans la table et message de réponse à cette requête), ainsi qu'éventuellement une notification destinée à signaler à un second backend qu'il doit procéder à une retransmission d'un message de réponse. De plus, les requêtes de détermination de backend et les messages de réponse correspondants, et les notifications, sont petits et peuvent être efficacement agrégés et intercalés dans le trafic inter backends pour limiter encore plus la charge sur le réseau.

Par ailleurs, l'invention évite au serveur de répartition de charge un traitement spécifique des retransmissions, ce qui n'est pas son rôle, en répartissant cette tâche supplémentaire sur les backends. En fait, grâce à l'invention le serveur de répartition de charge effectue sa propre tâche sans intervenir dans des opérations relatives au protocole de la couche supérieure qui pourraient entraîner des problèmes d'architecture et nuire à ses performances.

L'invention ne se limite pas aux modes de réalisation de procédé de traitement, de dispositif de traitement et d'équipement de communication décrits ci-avant, seulement à titre d'exemple, mais elle englobe toutes les variantes que pourra envisager l'homme de l'art dans le cadre des revendications ci-après.

## Revendications

1. Procédé de traitement de requêtes SIP initiales au sein d'un groupe SIP de modules logiciels de traitement final (Bi), ci-après appelés backends et opérant pour une application dans un réseau de communication (R), dans lequel, lorsqu'un premier backend (B1) dudit groupe SIP reçoit une requête SIP initiale associée à un identifiant d'appel, on détermine localement si il a déjà reçu une requête SIP initiale identique, et dans l'affirmative ledit premier backend (B1) considère que la requête SIP initiale reçue a été retransmise et traite cette retransmission, tandis que dans la négative on détermine dans une table, offrant une correspondance entre des identifiants d'appel, associés à des requêtes SIP initiales précédemment reçues, et des identifiants de backends (Bi) ayant reçu ces requêtes SIP initiales, si il existe un second backend (B2) dudit groupe SIP ayant un identifiant correspondant à l'identifiant d'appel associé à ladite requête SIP initiale reçue, puis dans la négative ledit premier backend (B1) traite ladite requête SIP initiale reçue, tandis que dans l'affirmative on fournit audit premier backend (B1 ) l'identifiant dudit second backend (B2) afin qu'il signale à ce dernier (B2) qu'il doit traiter une retransmission d'une requête SIP initiale précédemment reçue et associée au même identifiant d'appel que celui de ladite requête SIP initiale reçue.

2. Procédé selon la revendication 1, dans lequel ledit premier backend (B1) adresse audit second backend (B2) une notification comportant ledit identifiant d'appel de ladite requête SIP initiale reçue.

3. Procédé selon la revendication 1, dans lequel ledit premier backend (B1) transmet audit second backend (B2) ladite requête SIP initiale reçue afin qu'il la traite.

4. Procédé selon l'une des revendications 1 à 3, dans lequel, lorsqu'il n'existe pas de backend (B2) ayant un identifiant correspondant à l'identifiant d'appel associé à ladite requête SIP initiale reçue, on crée dans ladite table une nouvelle correspondance entre ce dernier identifiant d'appel et l'identifiant dudit premier backend (B1).

5. Procédé selon l'une des revendications 1 à 4, dans lequel ladite table est une table de hachage.

6. Procédé selon la revendication 5, dans lequel ladite table de hachage est distribuée dans au moins deux backends (Bi) dudit groupe SIP.

7. Dispositif (D) de traitement de requêtes SIP initiales pour un module logiciel de traitement final (Bi), ci-après appelé backend et appartenant à un groupe SIP opérant pour une application dans un réseau de communication (R), ledit dispositif (D) étant agencé, lorsque ledit backend (Bi) a reçu une requête SIP initiale associée à un identifiant d'appel, pour déterminer localement si ce dernier (Bi) a déjà reçu une requête SIP initiale identique, et dans l'affirmative pour considérer que ladite requête SIP initiale reçue a été retransmise et pour traiter cette retransmission, ou dans la négative pour déterminer dans une table, offrant une correspondance entre des identifiants d'appel, associés à des requêtes SIP initiales précédemment reçues, et des identifiants de backends (Bi) ayant reçu ces requêtes SIP initiales, si il existe un autre backend (Bi') dudit groupe SIP ayant un identifiant correspondant à l'identifiant d'appel associé à ladite requête SIP initiale reçue, afin, dans la négative, de traiter cette dernière, ou, dans l'affirmative, de recevoir l'identifiant dudit second backend (B2) pour signaler à ce dernier (B2) qu'il doit traiter une retransmission d'une requête SIP initiale précédemment reçue et associée au même identifiant d'appel que celui de ladite requête SIP initiale reçue.

8. Dispositif selon la revendication 7, agencé pour adresser audit second backend (B2) une notification comportant ledit identifiant d'appel de ladite requête SIP initiale reçue.

9. Dispositif selon la revendication 7, agencé pour transmettre audit second backend (B2) ladite requête SIP initiale reçue afin qu'il la traite.

10. Dispositif selon l'une des revendications 7 à 9, agencé, lorsqu'il n'existe pas de backend (B2) ayant un identifiant correspondant à l'identifiant d'appel associé à ladite requête SIP initiale reçue, pour provoquer la création dans ladite table d'une nouvelle correspondance entre ce dernier identifiant d'appel et l'identifiant dudit premier backend (B1).

11. Dispositif selon l'une des revendications 7 à 10, agencé pour stocker une partie d'une table se présentant sous la forme d'une table de hachage distribuée.

12. Equipement de communication (Ej) propre à être connecté à un réseau de communication et comprenant au moins un module logiciel de traitement final (Bi), ci-après appelé backend et appartenant à un groupe SIP opérant pour une application, dans lequel chaque backend (Bi) comprend un dispositif de traitement (D) selon l'une des revendications 7 à 11.
